Europäisches Patentamt

European Patent Office

Office européen des brevets

(11) Veröffentlichungsnummer: **0 473 990 A2**

# EUROPÄISCHE PATENTANMELDUNG

(21) Anmeldenummer: **91113639.8**

(22) Anmeldetag: **14.08.91**

(51) Int. Cl.5: **C08J 11/06**, B29C 67/14

(30) Priorität: **24.08.90 DE 4026786**

(43) Veröffentlichungstag der Anmeldung:
**11.03.92 Patentblatt 92/11**

(84) Benannte Vertragsstaaten:
**DE ES FR GB IT SE**

(71) Anmelder: **BASF Aktiengesellschaft**
**Carl-Bosch-Strasse 38**
**W-6700 Ludwigshafen(DE)**

(72) Erfinder: **Gehrig, Heinz, Dr.**
**Spinozastrasse 30**
**W-6750 Kaiserslautern(DE)**
Erfinder: **Horbach, Andreas**
**Saarstrasse 19**
**W-6759 Offenbach-Hundheim(DE)**

(54) **Wiederverwertung von Kunststoff-Altteilen und -Abfällen.**

(57) Die Erfindung betrifft ein Verfahren zur Wiederverwertung von gemahlenen Kunststoffaltteilen und Kunststoffabfall aus einem vernetzten, duroplastischen Kunststoff, Fasern und gegebenenfalls Füllstoffen, vorzugsweise aus SMC-Teilen, wobei man das Mahlgut, gegebenenfalls zusammen mit weiteren Zuschlagstoffen in eine Tauchkantenform einbringt, Harz in die Form injiziert und zu einem Formteil aushärtet.

EP 0 473 990 A2

Die Erfindung betrifft ein Verfahren zur Wiederverwertung von zerkleinerten Altteilen und Abfällen von faserverstärkten, vernetzten, duroplastischen Kunststoffen (SMC- und BMC-Teile).

Verstärkte duroplastische Kunststoffe werden in steigendem Maße als Ersatz für Metall und Holz für die Herstellung von Bauteilen in der Automobil-, Elektro- und Haushaltgeräte-Industrie verwendet. Beispiele dafür sind Karosserieteile, Scheinwerferreflektoren, Luftansaugkrümmer, Wasserpumpen, Blattfedern und Lenksäulen von Automobilen; Kühlschrankgehäuse, Staubsauger, Elektrogeräte, Briefkästen, Telefonhäuschen, ferner Leiterplatten und elektronische Bauteile. Wegen der begrenzten Lebensdauer der Geräte bereitet die Beseitigung bzw. Verwertung der Kunststoff-Altteile Probleme. Kunststoff-Abfälle fallen bei der Herstellung und Verarbeitung von Fertigteilen als Randbeschnitte oder Ausschußware an. Altteile und Abfälle aus thermoplastischen Kunststoffen können grundsätzlich durch Aufschmelzen aufgeschlossen und wiederverwendet werden; dies ist bei Duroplasten nicht möglich. Derartige Altteile und Abfälle wurden bisher auf Deponien gelagert oder verbrannt, Recycling-Methoden waren kaum bekannt. Die genannten Methoden zur Entsorgung von Kunststoff-Altteilen und -Abfällen sind aber nicht befriedigend.

Bei der Kunststoff-Messe 1989 wurden Versuchsteile aus faserverstärktem ungesättigtem Polyesterharz vorgestellt, die durch Formpressen nach dem BMC-Verfahren hergestellt worden waren und 31 Gew.-% Recyclat enthielten.

Ziel der Erfindung war nun, ein Verfahren zu entwickeln, das es ermöglicht, Formteile mit höheren Recyclat-Anteilen herzustellen.

Diese Aufgabe wird durch das erfindungsgemäße Injektionspräge-Verfahren gelöst.

Das zerkleinerte Kunststoff-Recyclat besteht im wesentlichen aus vernetztem, duroplastischem Kunststoff, Verstärkungsfasern und gegebenenfalls Füllstoffen und weiteren Additiven. Daneben können auch - je nach Herkunft des Altteils - untergeordnete Mengen thermoplastische Kunststoffe, Reste von elastischen Werkstoffen, z.B. Gummi, ferner Holz-, Pappe-, Papier- und Metallpartikel enthalten sein. Im allgemeinen hat das Recyclat folgende Zusammensetzung:

20-80 Gew.-% duroplastischer Kunststoff,
10-40 Gew.-% Fasern, z.B. Glasfasern,
0-70 Gew.-% Füllstoffe, z.B. Kreide.

Die häufigsten Duroplastaltteile bestehen aus glasfaserverstärkten Polyesterharzen; daneben fallen auch glas- oder Kohlenstoff-faserverstärkte Epoxidharze, glasfaserverstärkte Polyurethane und glasfaserverstärkte Phenolharze an.

Diese Altteile weren zunächst mit Schneidmühlen oder Prallmühlen grob zerkleinert, dann werden daraus die erfindungsgemäß eingesetzten Kunststoff-Recyclat-Partikel hergestellt. Es hat sich gezeigt, daß solche Partikel besonders geeignet sind, die auf definierte Weise zerkleinert wurden. Dabei werden bevorzugt schlagende Maschinen, insbesondere Hammermühlen oder Rotormühlen eingesetzt. Bei dieser Art der Zerkleinerung werden die Glasfasern verhältnismäßig wenig geschädigt. Die Bruchzonen verlaufen im wesentlichen parallel zu den Verstärkungsfasern, so daß im allgemeinen längliche Faserbüschel entstehen, die durch Kunststoff zusammengehalten sind.

Das Kunststoff-Recyclat besteht bevorzugt aus länglichen oder schuppenförmigen Partikeln mit einer mittleren Länge zwischen 1 und 20 mm; es sollte weniger als 3 Gew.-%, vorzugsweise weniger als 1 Gew.-% Feinanteile mit einer Teilchengröße von weniger als 0,1 mm enthalten.

Da Staub bei der Weiterverarbeitung stören würde, müssen Feinanteile mit einer Teilchengröße von weniger als 0,1 mm während oder nach dem Zerkleinern weitgehend abgeschieden werden. Dies kann z.B. dadurch geschehen, daß man aus der Zerkleinerungsmaschine Luft absaugt, wobei die Feinanteile mitausgetragen und über Filter oder Zyklon abgeschieden werden. Mittels eines (automatisch abreinigenden) Rückhaltesiebs oder -filters kann die Grenz-Partikelgröße festgelegt werden. Alternativ kann ein Windsichtsystem benutzt werden, bei dem Absauggeschwindigkeit und Partikelgewicht und -geometrie den Trennvorgang bestimmen, d.h. die Trenngrenze festlegen.

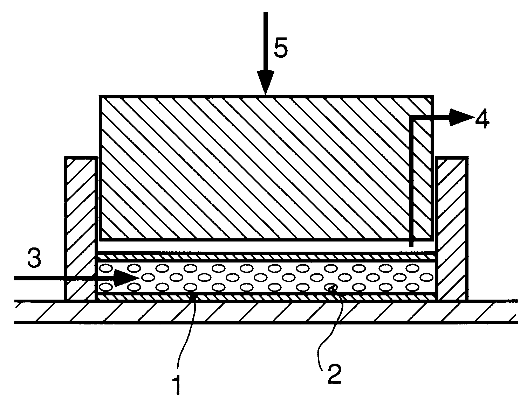

Bei dem erfindungsgemäßen Injektionspräge-Verfahren wird das Recyclat in eine Tauchkantenform eingebracht (siehe Zeichnung). Zusammen mit dem Recyclat können Zuschlagstoffe, wie z.B. Verstärkungsfasern, Holzmehl, mineralische Füllstoffe oder andersartige Abfallstoffe eingebracht werden. Fasern werden, bevorzugt in Form von Glasfasermatten oder -geweben, so in die Form gelegt, daß sie das Mahlgut oben und unten sandwichartig abdecken. Die Form wird im Tauchkantenbereich verschlossen, wobei sie aber noch nicht auf die Sollwanddicke des Formteils zugefahren wird. Dieses Stadium ist in der Zeichnung angedeutet. Danach wird härtbares Kunstharz in die Form injiziert, wobei die Form nur mit der Sollmenge und etwas Überschuß gefüllt wird. Nun wird die Form auf die gewünschte Endwanddicke des Formteils zugefahren (Prägevorgang), wobei die Restluft und überschüssiges Harz verdrängt werden. Gegebenenfalls kann das Verdrängen der Luft durch Anlegen von Vakuum unterstützt werden. Schließlich wird das Kunstharz in der Form entweder durch Temperaturerhöhung oder kalt ausgehärtet. Nach dem Abkühlen kann das entstandene Teil aus der Form entnommen werden. Nach diesem Verfahren ist es möglich, Formteile herzustellen, die bis zu 70 Gew.-%, vorzugsweise 25 bis 65 Gew.-%

Kunststoff-Recyclat enthalten.

Bevorzugte Kunstharze sind ungesättigte Polyesterharze, die im allgemeinen als Lösungen von 80 bis 40 Gew.-% ungesättigter Polyester in 20 bis 60 Gew.-% eines copolymerisierbaren Monomeren vorliegen. Die Polyester sind Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegebenenfalls zusätzliche Rest einwertiger Carbonsäuren oder einwertiger Alkohole enthalten, wobei zumindest ein Teil der Einsatzstoffe über ethylenisch ungesättigte, copolymerisationsfähige Gruppen verfügen muß. Als copolymerisierbare, ethylenisch ungesättigte monomere Verbindungen kommen die üblichen Allyl- und Vinylverbindungen in Frage, vorzugsweise Styrol.

Die erfindungsgemäß hergestellten Teile können mit Vorteil auf solchen Gebieten eingesetzt werden, wo das äußere Bild keine besondere Rolle spielt und keine allzu hohen Anforderungen an die mechanischen Eigenschaften gestellt werden. Besonders geeignet sind dickwandige, steife Teile mit ebenen oder nur schwach gewölbten Flächen. Beispiele dafür sind Eisenbahnschwellen, Paletten, Schachtauskleidungen, Werkzeugschränke, Abdeckplatten, LKW-Aufbauten.

Beispiel

Auf den Boden einer Tauchkantenform (siehe Zeichnung) wird eine Glasfasermatte (1) mit dem Flächengewicht 100 $g/m^2$ gelegt. Darauf wird SMC-Recylat (2) (Mahlgut mit einer maximalen Länge von 12 mm und einem Feinanteil < 0,1 mm von weniger als 1 Gew.-%) geschüttet, gleichmäßig verteilt und mit einer weiteren Glasfasermatte (1) abgedeckt. Das Recyclat hat die Zusammensetzung üblicher SMC-Rezepturen:
25 Gew.-% vernetzter ungesättigter Polyester
25 Gew.-% Glasfasern
50 Gew.-% Füllstoff Kreide.

In die Form wird nun ein ungesättigtes Polyesterharz (65 Gew.-Teile Polyester aus Orthophthalsäure und Dipropylenglykol, zusammen mit 2 Gew.-Teilen Cyclohexanonperoxid als Initiator und 0,3 Gew.-Teilen Cobaltnaphthenat als Beschleuniger, gelöst in 35 Gew.-Teile Styrol, zusammen mit 50 Gew.-Teilen Kreide,) injiziert (3). Dann wird an die Form Vakuum (4) angelegt, der Werkzeugtempel (5) wird auf die vorbestimmte Formteildicke zugefahren und das Harz wird bei einem Stempeldruck von 40 bar und bei Raumtemperatur ausgehärtet.

Das Formteil enthält 52 Gew.-% Recylat, 3 Gew.-% Glasfasermatten und 15 Gew.-% neu zugesetzte Kreide sowie 30 Gew.-% Harz.

Die Biegefestigkeit (nach DIN 53452) wurde zu 72 N $\cdot$ $mm^{-2}$, der E-Modul (nach DIN 53457) zu 5400 N $\cdot$ $mm^{-2}$ gemessen.

**Patentansprüche**

1. Verfahren zur Wiederverwertung von Kunststoffrecyclat, welches in Form eines Mahlguts mit einem Feinanteil < 0,1 mm von weniger als 3 Gew.-% vorliegt und

   20-80 Gew.-% eines vernetzten, duroplastischen Kunststoffs,
   10-40 Gew.-% Fasern und
   0-70 Gew.-% Füllstoff

   enthält, dadurch gekennzeichnet, daß man das Kunststoffrecyclat, gegebenenfalls zusammen mit Verstärkungsfasern und weiteren Zuschlagstoffen, in eine Tauchkantenform einbringt, die Form im Tauchkantenbereich schließt, ein härtbares Kunstharz injiziert, danach die Form auf die gewünschte Endwanddicke des herzustellenden Formteils schließt und dabei Restluft und überschüssiges Harz verdrängt, das Kunstharz aushärtet und das entstandene Formteil entnimmt.

2. Verfahren nach Anspruch 1, dadurch gekennzeichnet, daß die Mengenverhältnisse so gewählt werden, daß in dem entstandenen Formteil 25 bis 65 Gew.-% Kunststoffrecyclat enthalten sind.